# FASCICULE DE BREVET EUROPEEN

(11) **EP 2 922 803 B1**
(45) Date de publication et mention de la délivrance du brevet: **06.06.2018**
(21) Numéro de dépôt: 13792037.7
(22) Date de dépôt: 19.11.2013
(51) Int. Cl.: C04B 35/195, C04B 35/80

(54) **MATERIAU COMPOSITE A MATRICE EN ALUMINOSILICATE, NOTAMMENT EN ALUMINOSILICATE DE BARYUM " BAS ", RENFORCEE PAR DES RENFORTS EN OXYDE DE METAL, ET SON PROCEDE DE PREPARATION.**
KOMPOSITMATERIAL MIT ALUMOSILICATMATRIX, BEISPIELSWEISE BARIUM ALUMOSILICAT "BAS", MIT METALLOXIDVERSTÄRKUNG, UND SEIN HERSTELLUNGSVERFAHREN
COMPOSITE MATERIAL WITH AN ALUMINOSILICATE MATRIX, SUCH AS BARIUM ALUMINOSILICATE "BAS", REINFORCED WITH METAL OXIDE REINFORCEMENTS, AND ITS PROCESS OF MANUFACTURE

(30) Priorité: 20.11.2012 FR 1261020
(43) Date de publication de la demande: 30.09.2015
(73) Titulaire: Commissariat à l'Énergie Atomique et aux Énergies Alternatives, 75015 Paris (FR); Centre National de la Recherche Scientifique (C.N.R.S.), 75016 Paris (FR)
(72) Inventeur: ALLEMAND, Alexandre, F-33000 Bordeaux (FR); BILLARD, Romain, F-51200 Epernay (FR); LE PETITCORPS, Yann, F-33850 Leognan (FR)
(74) Mandataire: Brevalex
(86) Numéro de dépôt international: PCT/EP2013/074159
(87) Numéro de publication internationale: WO 2014/079837

(56) Documents cités:
- EP-A1- 0 819 657
- US-A- 5 281 559
- ANTTI M-L ET AL: "Thermal degradation of an oxide fibre (Nextel 720)/aluminosilicate composite", JOURNAL OF THE EUROPEAN CERAMIC SOCIETY, ELSEVIER SCIENCE PUBLISHERS, BARKING, ESSEX, GB, vol. 24, no. 3, 1 mars 2004 (2004-03-01), pages 565-578, XP004464463, ISSN: 0955-2219, DOI: 10.1016/S0955-2219(03)00250-4

## Description

### DOMAINE TECHNIQUE

L'invention concerne un matériau composite à matrice en au moins un aluminosilicate choisi parmi l'aluminosilicate de baryum BAS, l'aluminosilicate de baryum et de strontium BSAS, l'aluminosilicate de strontium SAS, et leurs mélanges, ladite matrice étant renforcée par des renforts en oxyde de métal ou de métalloïde.

L'invention concerne, en outre, le procédé de préparation de ce matériau composite.

Le matériau composite selon l'invention trouve notamment son application dans le domaine aéronautique ou aérospatial, par exemple pour la fabrication de radomes.

Le domaine technique de l'invention peut, de manière générale, être défini comme celui des matériaux composites à matrice en aluminosilicate, et notamment à matrice en aluminosilicate de baryum.

L'aluminosilicate de baryum répond à la formule BaAl₂Si₂O₈ et est aussi généralement désigné par l'abréviation BAS.

### ETAT DE LA TECHNIQUE ANTÉRIEURE

Le BAS se rencontre dans la littérature sous deux formes cristallines principales, à savoir: la forme celsian ou monoclinique et la forme hexacelsian (structure hexagonale du celsian) ou hexagonale. Il existe aussi une structure orthorhombique mineure.

La forme monoclinique est stable jusqu'à 1590°C et bénéficie d'un faible coefficient de dilatation thermique (de 2,3 10⁻⁶ °C⁻¹ pour sa forme vitrocéramique [3] à 4,5.10⁻⁶ °C⁻¹ pour sa forme monolithique [4]).

Ce faible coefficient de dilatation thermique rend cette forme monoclinique compatible avec les matériaux tels que le SiC ou le Si₃N₄ [5]. Cependant, c'est la forme hexagonale qui se forme principalement dans des conditions normales, sans ajouts de type Sr, Ca, Mg, Li.

La forme hexacelsian, hexagonale est stable entre 1590°C et 1750°C et devient métastable entre 300°C et 1590°C.

Cette forme hexagonale a un coefficient de dilatation bien plus important (8-10⁻⁶ °C⁻¹), et de ce fait n'est pas compatible avec les renforts précités.

Par ailleurs, la forme hexacelsian présente un polymorphisme vers 300°C. Le réseau passe d'une structure hexagonale à une structure orthorhombique avec une variation en volume de l'ordre de 3%.

De ce fait, la forme hexagonale est une phase indésirable et son utilisation dans les matériaux composites est proscrite.

Cependant, il est possible de faire une trempe pour figer la structure hexagonale [6].

Les matériaux composites à matrice de BAS bénéficient des bonnes propriétés électriques [1] de la matrice de BAS et de son caractère réfractaire avec notamment une température de fusion pouvant aller jusqu'à 1750°C.

Afin d'améliorer les propriétés mécaniques du BAS, des fibres de SiC ou de C sont classiquement introduites dans le matériau lors de son élaboration.

Ces fibres, si elles améliorent effectivement les propriétés mécaniques, rendent cependant le matériau électriquement conducteur.

Si l'on s'intéresse aux composites à matrice de BAS renforcée par des fibres de carbone, les documents [7] et [8] montrent la possibilité d'obtenir des composites à fibres de carbone courtes.

Le protocole d'élaboration consiste à mélanger des poudres d'oxydes avec des fibres de carbone en formant une barbotine, puis, après séchage à fritter le tout par pressage unidirectionnel à chaud pendant 1 heure sous 20MPa à une température comprise entre 1300°C et 1700°C. La contrainte maximale à la rupture en flexion obtenue est de 200MPa pour 30% de fibres (elle est de 100 MPa pour le BAS monolithique [9]). Des poudres de zircone sont également introduites lors de l'élaboration.

Outre le fait que les fibres de carbone rendent le matériau composite obtenu électriquement conducteur, il se produit une diffusion à l'interface entre les oxydes et les fibres de carbone car le carbone est connu pour carburer les oxydes.

Les travaux concernant les matériaux composites à matrice de BAS renforcée par des fibres de SiC sont plus nombreux.

En effet, les coefficients de dilatation du BAS monoclinique et de la fibre de SiC sont quasiment identiques, à savoir 4,8 10⁻⁶/°C pour le BAS [4] monoclinique et de 3,5 à 4,3 10⁻⁶/°C pour la fibre de SiC.

En ce qui concerne les procédés de préparation de ces matériaux composites à matrice de BAS renforcée par des fibres de SiC, on distingue d'une part les procédés qui utilisent la voie dite « vitrocéramique » et d'autre part les procédés qui utilisent la voie dite « poudres frittées ».

Les procédés qui utilisent la voie dite « vitrocéramique » mettent en jeu des matrices vitrocéramiques c'est-à-dire des verres dans lesquels un traitement thermique constitué de paliers de température a permis de faire germer puis croître des phases cristallisées en quantité plus ou moins importante à l'intérieur du verre.

Dans les procédés qui utilisent la voie dite « poudres frittées », la matrice est réalisée directement, par l'intermédiaire de poudres frittées.

La voie « vitrocéramique » est souvent utilisée car elle garantit une bonne aptitude à la densification par écoulement visqueux à l'état de verre entre les fibres et le renfort, et la possibilité de cristalliser ensuite, permet d'augmenter la résistance mécanique et la tenue en température.

Ainsi, le document [10] propose un procédé pour élaborer un composite vitrocéramique BAS de structure monoclinique renforcée par des fibres continues de SiC élaborées par dépôt chimique en phase vapeur, CVD.

Ce procédé en deux étapes consiste à réaliser par la technique du coulage en bande, des pavés de vitrocéramique constitués par un verre avec inclusion de cristallites de BAS monoclinique, puis d'alterner ces pavés avec des fibres de SiC. Après avoir répété l'opération plusieurs fois, le matériau est pressé par pressage unidirectionnel à chaud entre 1250°C et 1500°C.

Deux autres documents mettent en oeuvre les mêmes fibres de SiC et le même procédé d'élaboration mais avec des matrices de natures chimiques différentes.

Le premier de ces documents [11] met en oeuvre une matrice vitrocéramique en aluminosilicate de baryum et de strontium (BSAS). Le strontium permet en effet de stabiliser le BAS dans sa forme monoclinique [12]. Le second de ces documents [13] met en oeuvre une matrice vitrocéramique en aluminate de strontium (SAS).

Le document [14] met en oeuvre une matrice vitrocéramique de BAS contenant du Calcium.

La matrice est alors essentiellement composée d'aluminosilicate de baryum BAS sous forme celsian monoclinique, avec un rapport molaire BaO/(BaO+CaO) compris entre 25% et 55%. Ce rapport permet d'ajuster le coefficient de dilatation de la matrice par rapport à la fibre employée. La plage de coefficient de dilatation de la matrice s'échelonne alors entre 4,2 10⁻⁶/°C et 3,5 10⁻⁶/°C, tandis que le coefficient de dilatation de la fibre de SiC s'échelonne entre 3,5 10⁻⁶/°C et 4,3 10⁻⁶/°C, en fonction de la nature de la fibre choisie et du procédé utilisé pour son élaboration. De ce fait, il n'y a pas de contraintes mécaniques dues au refroidissement.

La voie « poudre frittée » est notamment décrite dans le document [2], qui présente un matériau composite avec une matrice de BSAS (0,75BaO-0,25SrO-Al₂O₃-2SiO₂) monoclinique, et des fibres de SiC « Hi-Nicalon® » » revêtues de BN et de SiC.

Le BN déposé par CVD joue ici le rôle d'interphase faible, fusible mécanique, d'une épaisseur d'environ 0,4 µm. Le SiC qui recouvre le BN est également déposé par CVD, il a une épaisseur de 0,3 µm et sert de barrière de diffusion.

Le procédé de préparation de ce matériau composite consiste à préparer une barbotine, comprenant un liant et un plastifiant, avec de la poudre de BSAS préalablement synthétisée, à déposer la barbotine sur un fil de fibres de SiC revêtues de BN puis de SiC par CVD, puis à enrouler ce fil sur un mandrin.

Après séchage, des plaques de fils revêtues de barbotine sont découpées puis empilées, déliantées, et frittées dans une presse unidirectionnelle à chaud.

Le composite obtenu contient 42% en volume de fibres de SiC. La contrainte à la rupture observée est de l'ordre de 400 à 470 MPa (à comparer avec 100MPa pour du BAS monolithique [9]), le module de Young est de 165 GPa (à comparer avec 138 GPa pour le BAS).

Par ailleurs, il existe des matériaux composites à matrice d'alumine renforcée par des fibres d'alumine.

Le document [15] présente un procédé qui permet la densification par voie liquide d'une texture de renfort fibreuse en alumine ou en SiC par une matrice d'alumine.

Le procédé comprend une étape d'imprégnation de la texture fibreuse par un précurseur fluide d'alumine, une résine thermoplastique et de la poudre submicronique d'alumine. Le tout est ensuite pressé à chaud. Dans ce document, la matrice est exclusivement en alumine et non en BAS.

Le document US-A1-2008/0283465 a trait à un corps en céramique poreuse comprenant un substrat fibreux comprenant une pluralité de fibres ayant un premier coefficient de dilatation thermique ; et un système de liaison ayant un deuxième coefficient dilatation thermique inférieur au premier coefficient de dilatation thermique.

Le système de liaison lie une partie d'au moins deux fibres de la pluralité de fibres pour former le corps en céramique poreuse.

Le système de liaison peut être formé par exemple par de l'aluminosilicate de baryum ou de l'aluminosilicate de strontium.

Le matériau de ce document ne comprend pas une matrice en aluminosilicate et il ne comprend pas non plus des renforts en un oxyde de métal ou de métalloïde qui renforcent cette matrice.

Il existe donc, au vu de ce qui précède, un besoin pour un matériau composite à matrice en aluminosilicate, notamment en aluminosilicate de baryum « BAS », renforcée par des renforts qui, tout en présentant les bonnes propriétés électriques et réfractaires, inhérentes à la matrice de BAS, ne présente pas les inconvénients dus aux renforts utilisés jusqu'alors dans ces matériaux composites afin d'en améliorer les propriétés mécaniques.

Ce matériau composite à matrice en aluminosilicate, notamment en aluminosilicate de baryum « BAS », renforcée doit présenter d'excellentes propriétés mécaniques et, avantageusement, être dense et exempt de fissures.

Il existe, en outre, un besoin pour un procédé de préparation d'un tel matériau.

Le but de la présente invention est entre autres de répondre à ces besoins.

Le but de la présente invention est encore de fournir un matériau composite à matrice en aluminosilicate, notamment en aluminosilicate de baryum « BAS », renforcée, qui ne présente pas les inconvénients, défauts, limitations et désavantages des matériaux composites de l'art antérieur et qui résolve les problèmes des matériaux de l'art antérieur.

### EXPOSÉ DE L'INVENTION

Ce but, et d'autres encore sont atteints, conformément à l'invention par un matériau composite constitué par une matrice en au moins un aluminosilicate choisi parmi l'aluminosilicate de baryum BAS, l'aluminosilicate de baryum et de strontium BSAS, l'aluminosilicate de strontium SAS, et leurs mélanges, renforcée par des renforts en au moins un oxyde de métal ou de metalloïde dont le coefficient de dilatation est voisin de celui du au moins un aluminosilicate.

De préférence, la matrice est (uniquement) en aluminosilicate de baryum BAS.

Par coefficient de dilatation « voisin » au sens de l'invention, on entend généralement que le coefficient de dilatation du au moins un aluminosilicate, tel que l'aluminosilicate de baryum BAS, et le coefficient de dilatation du au moins un oxyde de métal ou de métalloïde ne diffèrent pas de plus de 30%, de préférence pas de plus de 10%.

L'aluminosilicate de baryum BAS peut comprendre en majorité en masse du BAS de structure hexagonale, auquel cas les renforts sont alors avantageusement en alumine.

Ou bien, l'aluminosilicate de baryum BAS peut comprendre en majorité en masse du BAS de structure monoclinique, auquel cas les renforts sont alors avantageusement en silice et/ou en mullite.

Avantageusement, les renforts en au moins un oxyde de métal ou de métalloïde se présentent sous une ou plusieurs forme(s) choisie(s) parmi les particules telles que les fibres longues, les fibres courtes aussi appelées trichites ou whiskers ; et les tissus de fibres.

Avantageusement, la matrice représente de 99% à 50% en masse du matériau, et les renforts représentent de 1% à 50% en masse du matériau.

Généralement, le matériau composite selon l'invention est un matériau dense avec une densité de 80% à 100% de la densité théorique.

Le matériau composite selon l'invention, avec une matrice en aluminosilicate tel que le BAS et des renforts d'oxyde, n'a jamais été décrit dans l'art antérieur, tel que représenté notamment par les documents cités plus haut.

Le matériau composite selon l'invention est intégralement constitué d'oxydes, puisque aussi bien la matrice que les renforts sont des oxydes. De ce fait, on peut dire que le matériau selon l'invention se comporte comme un seul matériau, un matériau unique, monolithique. Le matériau composite selon l'invention présente en conséquence d'excellentes propriétés, notamment mécaniques, mais aussi électriques, et thermiques, et ces propriétés sont généralement supérieures à celles des matériaux composites à matrice en aluminosilicate, par exemple à matrice en BAS, SBAS, ou SAS, renforcée par des renforts qui ne sont pas des oxydes, tels que des renforts en C ou en SiC.

Les renforts du matériau selon l'invention qui sont en oxydes de métaux ou de métalloïdes ne sont pas conducteurs, au contraire des renforts en C ou en SiC des matériaux composites de l'art antérieur. Un des inconvénients majeurs des matériaux composites de l'art antérieur à renforts en C ou en SiC est donc ainsi surmonté.

En outre, selon l'invention, le coefficient de dilatation de l'aluminosilicate tel que l'aluminosilicate de baryum BAS et le coefficient de dilatation du au moins un oxyde de métal ou de métalloïde sont voisins.

Il en résulte que le matériau composite selon l'invention est dense, et qu'il ne se produit pas au sein du matériau composite selon l'invention de dilatation différentielle conduisant à des fissurations.

En d'autres termes, le matériau composite selon l'invention du fait notamment de la compatibilité des coefficients de dilatation de l'aluminosilicate tel que le BAS et de l'oxyde des renforts est dense et exempt de fissures.

Le matériau composite selon l'invention peut notamment comprendre une matrice de BAS hexagonale, alors même que l'on considérait jusqu'alors que cette forme hexagonale du BAS était indésirable et à éviter dans de tels matériaux.

Du fait que la forme hexagonale du BAS est stable dans la plage de température de 1590°C à 1750°C, le matériau composite selon l'invention, lorsqu'il possède une matrice en BAS hexagonale conviendra particulièrement bien à des applications dans lesquelles la température de travail se situe dans ces plages élevées.

Dans le cas où la matrice est en BAS hexagonale, le renfort est avantageusement en alumine.

L'alumine présente la particularité d'avoir un point de fusion élevé de 2050°C, en revanche sa permittivité est plus élevée que celle du BAS (9,2 à 10 GHz pour Al₂0₃ contre 6,1 à 5 GHz pour le BAS).

Dans le cas où la matrice est en BAS monoclinique, le renfort est avantageusement en silice ou en mullite.

En effet, le BAS est un composé défini à fusion congruente à 1750 ± 10°C et est le seul en équilibre avec la silice (SiO₂) et l'alumine (Al₂O₃).

Son équilibre avec la silice et l'alumine rend donc judicieuse l'utilisation de ces matériaux en tant que renfort.

La silice ou l'alumine ne réagit pas avec la matrice lors de son utilisation ou lors de la fabrication du composite.

Les mécanismes de déviation de fissures sont favorisés et donc la ténacité améliorée.

En outre, des fibres oxydes de type Al₂O₃, SiO₂ ou de mullite (3Al₂O₃.2 SiO₂) sont facilement disponibles dans le commerce.

En conclusion, le matériau composite selon l'invention ne présente pas les inconvénients des matériaux composites à matrice de BAS renforcée de l'art antérieur, et apporte une solution aux problèmes posés par ces matériaux.

L'invention a également trait à un procédé de préparation du matériau composite tel qu'il a été décrit plus haut, dans lequel on réalise les étapes successives suivantes :
a) on met en contact une poudre d'au moins un aluminosilicate choisi parmi l'aluminosilicate de baryum BAS, l'aluminosilicate de baryum et de strontium BSAS, l'aluminosilicate de strontium SAS, et leurs mélanges, avec des renforts en au moins un oxyde de métal ou de métalloïde dont le coefficient de dilatation est voisin de celui dudit au moins un aluminosilicate ;
b) on réalise un frittage de la poudre d'au moins un aluminosilicate et des renforts en au moins un oxyde de métal ou de métalloïde par un procédé de frittage à chaud avec un champ électrique puisé ;
c) on refroidit la poudre et les renforts frittés ;
d) on récupère le matériau composite.

De préférence, la poudre d'au moins un aluminosilicate est une poudre d'aluminosilicate de baryum BAS.

L'aluminosilicate de baryum BAS peut comprendre en majorité en masse du BAS de structure hexagonale.

Avantageusement, la poudre de BAS, dans le cas où elle comprend en majorité en masse du BAS de structure hexagonale, est préparée en réalisant les étapes successives suivantes :
- on mélange de la poudre de BaCO₃ et de la poudre de SiO₂ dans un rapport molaire de 1 BaCO₃ pour 2 SiO₂ ;
- on sèche puis on fritte le mélange de la poudre de BaCO₃ et de la poudre de SiO₂, moyennant quoi on obtient un composé constitué en majorité du composé BaSi₂O₅ ;
- on broie le composé constitué en majorité de BaSi₂O₅, moyennant quoi on obtient une poudre dudit composé constitué en majorité de BaSi₂O₅ ;
- on mélange la poudre de composé constitué en majorité de BaSi₂O₅, et de la poudre de Al₂O₃ dans un rapport molaire de 1 BaSi₂O₅ pour 1 Al₂O₃;
- on sèche puis on fritte le mélange de la poudre de composé constitué en majorité de BaSi₂O₅, et de la poudre d'Al₂O₃, et on broie le mélange fritté, moyennant quoi on obtient une poudre de BAS, qui comprend en majorité du BAS de structure hexagonale.

Lorsque l'aluminosilicate de baryum BAS comprend en majorité en masse du BAS de structure hexagonale, les renforts sont alors avantageusement en alumine.

Ou bien, l'aluminosilicate de baryum BAS peut comprendre en majorité en masse du BAS de structure monoclinique auquel cas les renforts sont alors avantageusement en silice et/ou en mullite.

Avantageusement, les renforts en au moins un oxyde de métal ou de métalloïde se présentent sous une ou plusieurs forme(s) choisie(s) parmi les particules telles que les fibres longues, et les fibres courtes aussi appelées trichites ou whiskers ; et les tissus de fibres.

Dans une forme de réalisation, lors de l'étape a), on prépare un mélange de la poudre d'au moins un aluminosilicate, telle que de la poudre d'aluminosilicate de baryum, et de particules en au moins un oxyde de métal ou de metalloïde.

Dans une autre forme de réalisation, lors de l'étape a), on imprègne un tissu de fibres en au moins un oxyde de métal ou de metalloïde par une barbotine de la poudre d'au moins un aluminosilicate, telle que de la poudre d'aluminosilicate de baryum.

Un procédé permettant la préparation d'un matériau composite à matrice en aluminosilicate, tel que le BAS, et à renforts d'oxyde n'a jamais été décrit dans l'art antérieur.

Le procédé selon l'invention permet pour la première fois, de manière surprenante, la préparation d'un tel matériau composite à matrice en aluminosilicate, tel que le BAS et à renforts d'oxyde.

L'utilisation du « SPS » pour préparer un tel matériau composite n'a jamais été ni décrite, ni suggérée dans l'art antérieur tel qu'il a été étudié plus haut.

Bien que quelques documents traitent du frittage de poudres, aucun ne met en oeuvre le « SPS » comme moyen de frittage.

C'est précisément la mise en oeuvre de la technique de «SPS » qui, de manière surprenante, permet d'obtenir le matériau composite dense, non fissuré, à matrice en aluminosilicate tel que le BAS, et à renforts d'oxyde selon l'invention.

Il apparaît que seul le procédé selon l'invention permet d'obtenir un composite à matrice en aluminosilicate, tel que le BAS, et à renforts d'oxyde, dense, et non fissuré.

La technique de « SPS » mise en oeuvre selon l'invention assure un frittage très rapide qui permet de figer les phases haute température, et notamment la phase haute température hexagonale, hexacelsian, métastable du BAS.

Le procédé selon l'invention permet pour la première fois de préparer un matériau composite à matrice de BAS hexagonale stabilisé alors même que l'on considérait jusqu'alors que cette forme hexagonale du BAS était indésirable dans de tels matériaux.

La forme hexagonale du BAS a la particularité de présenter le même coefficient de dilatation que l'alumine et sera donc utilisée de préférence avec des renforts en cet oxyde.

### BRÈVE DESCRIPTION DES DESSINS

D'autres caractéristiques et avantages de l'invention ressortiront mieux à lecture de la description qui va suivre, donnée à titre illustratif et non limitatif en référence aux Figures annexées, dans lesquelles :
- La Figure 1 est une vue schématique en coupe verticale d'un exemple d'appareil de SPS pour la mise en oeuvre du procédé selon l'invention ;
- La Figure 2 est un graphique qui montre un cycle thermique utilisé lors de l'étape de frittage par SPS du procédé selon l'invention.

En abscisse est porté le temps (en minutes) et en ordonnée est portée la température (en °C).
- La Figure 3 est un diffractogramme obtenu lors de l'analyse par DRX (Diffraction des Rayons X sur poudre) d'une pastille constituée par un mélange de poudres de BaCO₃ et de SiO₂ ayant subi un premier traitement thermique de frittage avec un palier à 1150°C pendant 4 heures dans un four tubulaire.

En abscisse est porté 2 Thêta (en degrés d'angle), et en ordonnée est porté Lin (en coups).
- La Figure 4 présente une micrographie réalisée au microscope électronique à balayage d'une coupe, d'une pastille constituée par un mélange de poudres de BaCO₃ et de SiO₂ ayant subi un traitement thermique de frittage avec un palier à 1150°C pendant 4 heures dans un four tubulaire.

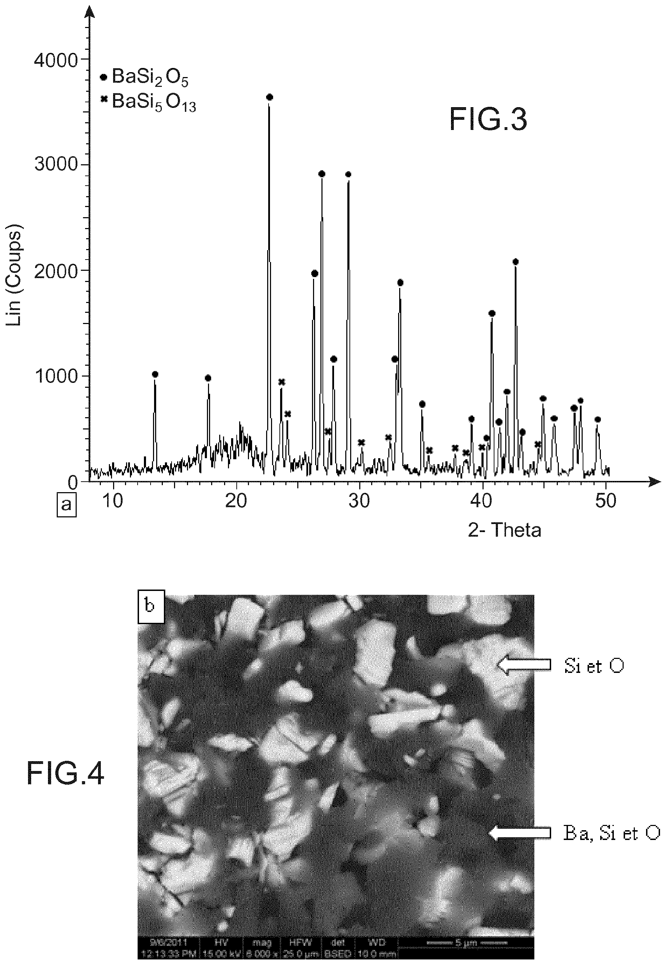

L'échelle portée sur la Figure 4 représente 5 µm.

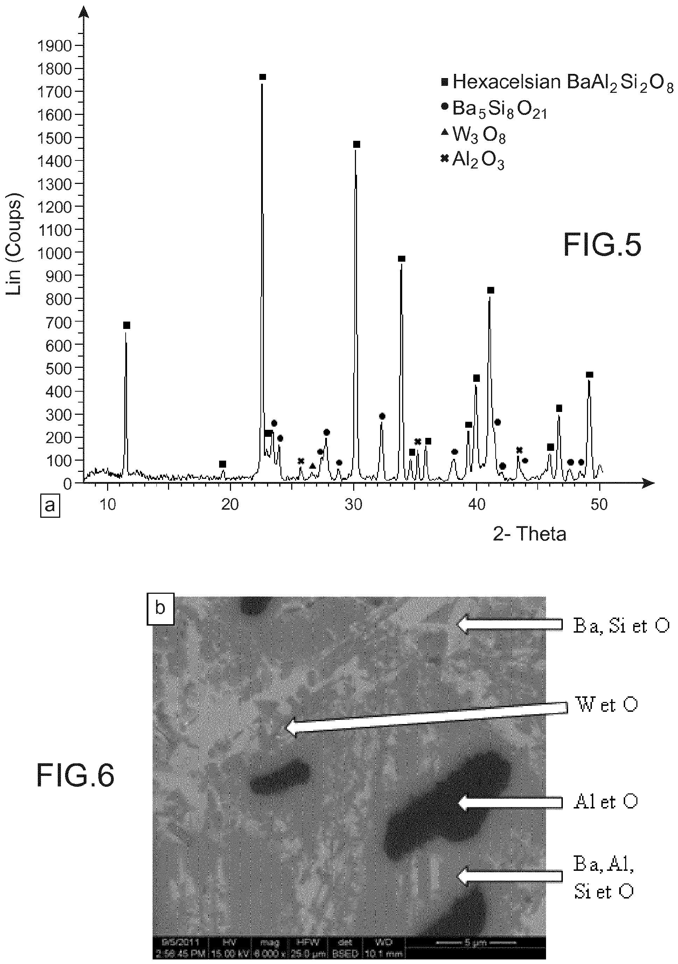

- La Figure 5 est un diffractogramme obtenu lors de l'analyse par DRX d'une pastille obtenue après un second traitement de frittage dans un four tubulaire avec un palier à 1200°C pendant 6 heures.

En abscisse est porté 2 Thêta (en °), et en ordonnée est porté Lin (en coups).
- La Figure 6 présente une micrographie, réalisée au microscope électronique à balayage, d'une coupe d'une pastille obtenue après un second traitement de frittage dans un four tubulaire avec un palier à 1200°C pendant 6 heures.

L'échelle portée sur la Figure 6 représente 5 µm.

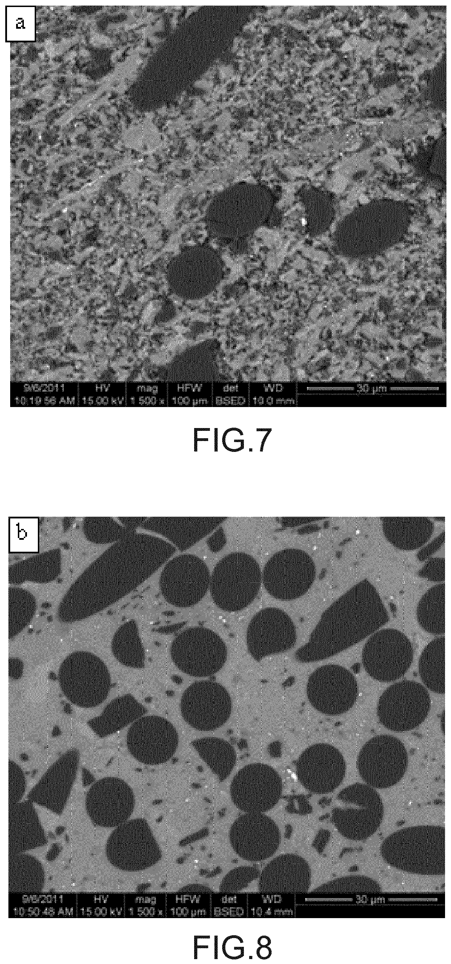

- La Figure 7 présente une micrographie, réalisée au microscope électronique à balayage d'un matériau composite à matrice de BAS renforcée par des fibres d'alumine, préparé par frittage par SPS à une température de 1000°C pendant 5 minutes.

L'échelle portée sur la Figure 7 représente 30 µm.
- La Figure 8 présente une micrographie, réalisée au microscope électronique à balayage d'un matériau composite à matrice de BAS renforcée par des fibres d'alumine, préparé par frittage par SPS à une température de 1200°C pendant 5 minutes.

L'échelle portée sur la Figure 8 représente 30 µm.

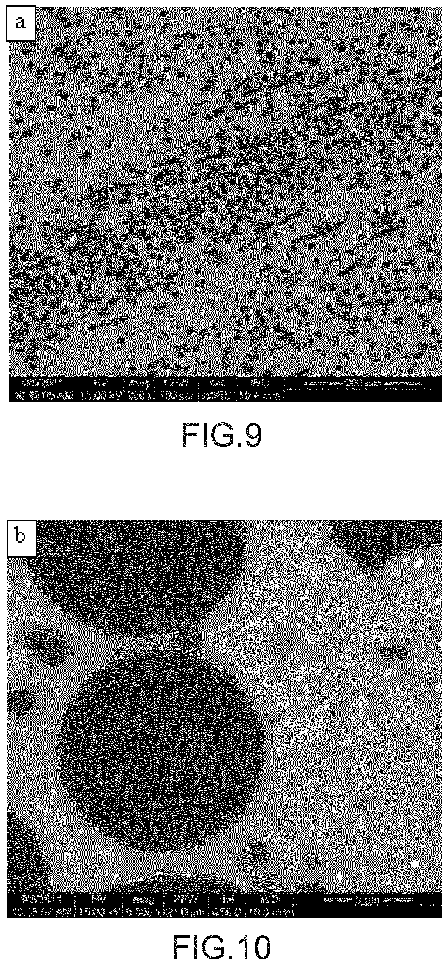

- La Figure 9 présente une micrographie, réalisée au microscope électronique à balayage à un grossissement de 200 d'un matériau composite à matrice de BAS renforcée par des fibres d'alumine, préparé par frittage par SPS à une température de 1200°C pendant 5 minutes.

L'échelle portée sur la Figure 9 représente 200 µm.
- La Figure 10 présente une micrographie, réalisée au microscope électronique à balayage à un grossissement de 6000 d'un matériau composite à matrice de BAS renforcée par des fibres d'alumine, préparé par frittage par SPS à une température de 1200°C pendant 5 minutes.

L'échelle portée sur la Figure 10 représente 5 µm.

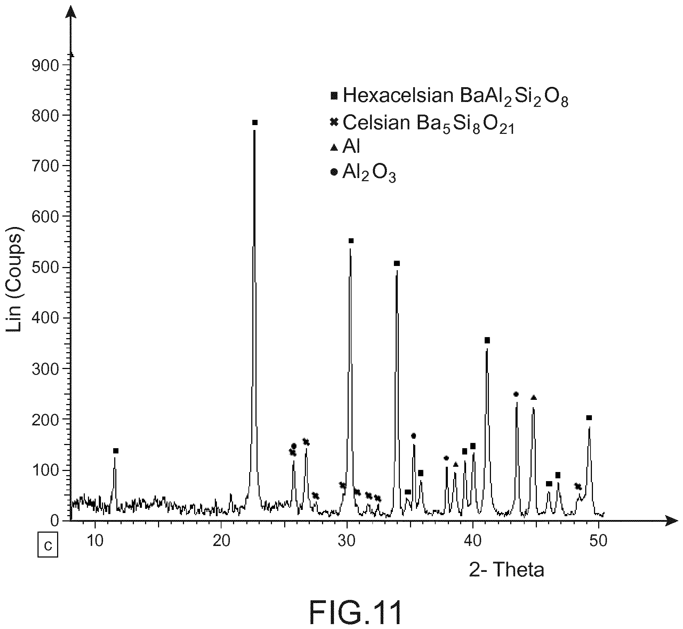

- La Figure 11 est un diffractogramme obtenu lors de l'analyse par DRX du coeur d'un matériau composite à matrice de BAS renforcée par des fibres d'alumine, préparé par frittage par SPS à une température de 1200°C pendant 5 minutes.

En abscisse est porté 2 Thêta (en °), et en ordonnée est porté Lin (en coups).

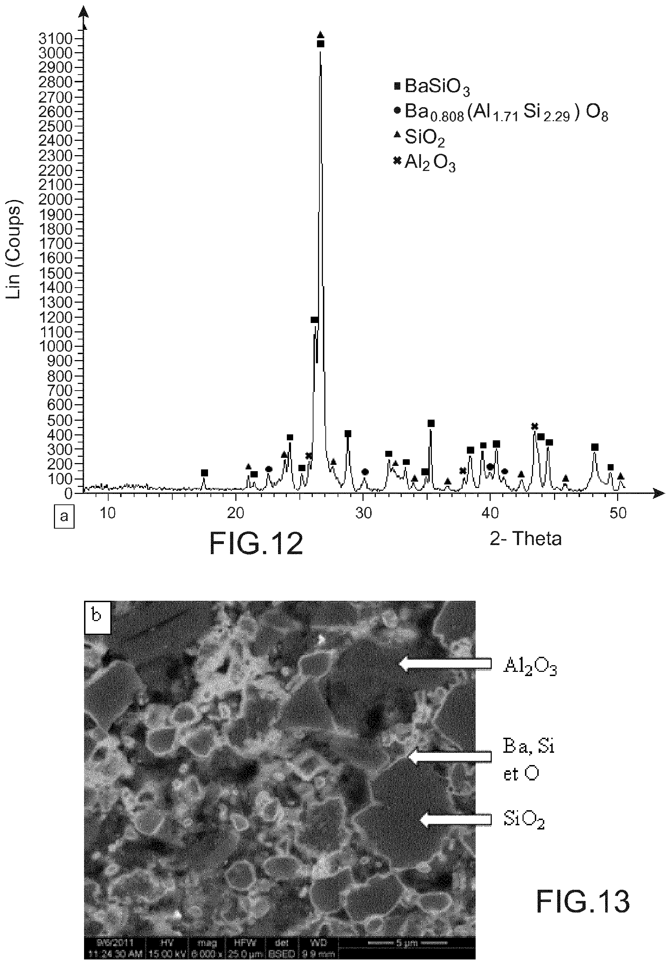

- La Figure 12 est un diffractogramme obtenu lors de l'analyse par DRX d'une pastille constituée par les trois poudres de BaCO₃, Al₂O₃, et SiO₂ après frittage par SPS à 1000°C pendant 5 minutes.

En abscisse est porté 2 Thêta (en °), et en ordonnée est porté Lin (en coups).
- La Figure 13 présente une micrographie, réalisée au microscope électronique à balayage d'une coupe d'une pastille constituée par les trois poudres de BaCO₃, Al₂O₃, et SiO₂ après frittage par SPS à 1000°C pendant 5 minutes.

L'échelle portée sur la Figure 13 représente 5 µm.

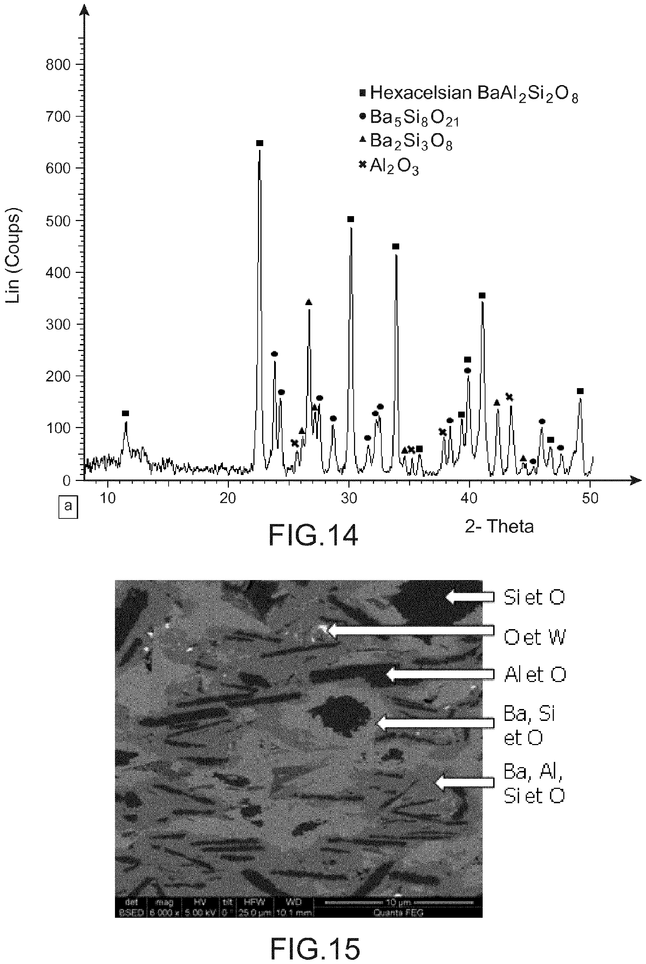

- La Figure 14 est un diffractogramme obtenu lors de l'analyse par DRX d'une pastille constituée par les trois poudres de BaCO₃, Al₂O₃, et SiO₂, la poudre de SiO₂ étant plus grossière et la poudre de Al₂O₃ étant plus fine, après frittage par SPS à 1000°C pendant 5 minutes.

En abscisse est porté 2 Thêta (en °), et en ordonnée est porté Lin (en coups).
- La Figure 15 présente une micrographie, réalisée au microscope électronique à balayage d'une coupe d'une pastille constituée par les trois poudres de BaCO₃, Al₂O₃, et SiO₂, la poudre de SiO₂ étant plus grossière et la poudre de Al₂O₃ étant plus fine, après frittage par SPS à 1000°C pendant 5 minutes.

L'échelle portée sur la Figure 15 représente 10 µm.

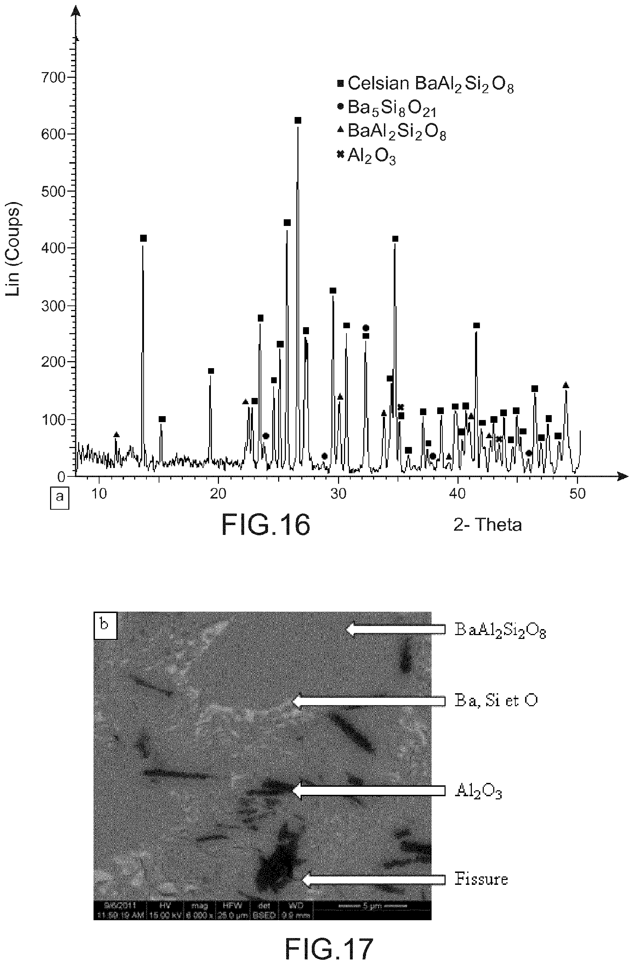

- La Figure 16 est un diffractogramme obtenu lors de l'analyse par DRX d'une pastille après un traitement de recuit avec un palier à 1150°C pendant 4 heures.

En abscisse est porté 2 Thêta (en °), et en ordonnée est porté Lin (en coups).
- La Figure 17 présente une micrographie, réalisée au microscope électronique à balayage d'une pastille après un traitement de recuit avec un palier à 1150°C pendant 4 heures

L'échelle portée sur la Figure 17 représente 5 µm.

### EXPOSÉ DÉTAILLÉ DE MODES DE RÉALISATION PARTICULIERS

La description qui suit est plutôt faite, par commodité, en référence au procédé de préparation du matériau composite salon l'invention mais il est bien évident qu'elle contient aussi des enseignements qui s'appliquent au matériau composite selon l'invention.

La description qui suit est également plutôt faite en référence à la préparation d'un matériau composite dont la matrice est en un seul aluminosilicate, à savoir le BAS. Mais il est bien évident que cette description pourra être facilement adaptée par l'homme du métier, pour permettre la préparation d'un matériau composite dont la matrice est, de manière générale, en au moins un aluminosilicate choisi parmi l'aluminosilicate de baryum BAS, l'aluminosilicate de baryum et de strontium BSAS, l'aluminosilicate de strontium SAS, et leurs mélanges.

Dans la première étape du procédé selon l'invention, on met en contact une poudre d'aluminosilicate de baryum BAS et des renforts en au moins un oxyde de métal ou de métalloïde dont le coefficient de dilatation est voisin de celui de l'aluminosilicate de baryum.

La poudre d'aluminosilicate de baryum BAS peut comprendre en majorité du BAS de structure hexagonale.

Par « en majorité », on entend généralement que la poudre de BAS comprend plus de 50% en masse, de préférence plus de 80% en masse de BAS de structure hexagonale, de préférence encore 100% en masse de BAS de structure hexagonale.

Le reste de la poudre de BAS peut comprendre en minorité, une ou plusieurs impuretés choisies par exemple parmi l'alumine, la silice, et des silicates de baryum tels que le Ba₅Si₈O₂₁ et le Ba₃Si₅O₁₃.

Comme on le précise plus loin, lorsque la poudre de BAS comprend en majorité du BAS de structure hexagonale, alors les renforts sont en alumine.

Ou bien, la poudre d'aluminosilicate de baryum BAS peut comprendre en majorité du BAS de structure monoclinique.

Par « en majorité », on entend généralement que la poudre de BAS comprend plus de 50% en masse, de préférence plus de 80% en masse de BAS de structure monoclinique, de préférence encore 100% en masse de BAS de structure monoclinique.

Comme on le précise plus loin, lorsque la poudre de BAS comprend en majorité du BAS de structure monoclinique, les renforts sont alors en silice et/ou en mullite.

La poudre d'aluminosilicate de baryum peut être constituée par des particules de forme quelconque par exemple de forme sphérique ou sphéroïdale.

La taille -définie par leur plus grande dimension- moyenne des particules de la poudre d'aluminosilicate de baryum est généralement de 10 nm à 100 microns, de préférence de 1 micron à 10 microns.

Il a été mis au point selon l'invention un mode opératoire, protocole, nouveau qui permet d'obtenir une poudre de BAS qui comprend en majorité du BAS de structure hexagonale.

Ce mode opératoire, protocole, qui a déjà été décrit plus haut consiste à faire réagir successivement et non en une seule fois les composés BaCO₃, Al₂0₃, et Si0₂ [16].

Ce mode opératoire comprend donc les étapes successives suivantes :
(1) on mélange de la poudre de BaCO₃ et de la poudre de SiO₂ dans un rapport molaire de 1 BaCO₃ pour 2 SiO₂.
   Ce mélange peut être réalisé par voie humide dans un liquide tel que l'éthanol.
   Ainsi, on pourra par exemple mélanger la poudre de BaCO₃ et la poudre de SiO₂ pendant par exemple 30 minutes dans un liquide tel que de l'éthanol, dans un broyeur comme par exemple un broyeur RETSCH (broyeur à billes) en WC.
(2) on sèche puis on fritte le mélange de la poudre de BaCO₃ et de la poudre de SiO₂.
   Ce séchage et ce frittage peuvent être réalisés pendant une durée de 1 à 10 heures, par exemple de 4 heures, à une température de 1000°C à 1400°C, par exemple de 1150°C, par exemple sous air, dans un appareil tel qu'un four tubulaire. A l'issue de cette étape, on obtient un mélange fritté de la poudre de BaCO₃ et de la poudre de SiO₂, constitué en majorité, en moles (composition chimique), de BaSi₂O₅. Ce composé est ensuite broyé pendant une durée de 10 minutes à 2 heures, par exemple pendant une durée de 1 heure. Ce broyage peut être réalisé par voie humide dans un liquide tel que l'éthanol.
   On peut utiliser par exemple un broyeur RETSCH (broyeur à billes) en WC.
(3) on mélange le produit obtenu à l'issue de l'étape (2), avec de la poudre de Al₂O₃ dans un rapport molaire de 1 BaSi₂O₅ pour 1 Al₂O₃.
   Ce mélange peut être réalisé par voie humide dans un liquide tel que l'éthanol.
   Ainsi, on pourra par exemple mélanger le mélange fritté avec de la poudre d'Al₂O₃ pendant par exemple 30 minutes dans un liquide tel que de l'éthanol, dans un broyeur comme par exemple un broyeur RETSCH (broyeur à billes) en WC.
(4) on sèche puis on fritte le mélange obtenu à l'issue de l'étape (3).

Ce séchage et ce frittage peuvent être réalisés pendant une durée de 1 à 10 heures, par exemple de 6 heures, à une température de 1000°C à 1400°C, par exemple de 1200°C, par exemple sous air, dans un appareil tel qu'un four tubulaire.

Le produit obtenu à l'issue de cette étape est constitué en majorité, c'est-à-dire à plus de 50%, voire à plus de 80% en masse par du BAS hexagonal. Il reste cependant encore de l'alumine, et du silicate de baryum mais ces phases secondaires ne sont pas rédhibitoires pour le reste du procédé.

Ce produit, obtenu à l'issue de l'étape (4), est broyé pendant une durée de 1 minute à 2 heures, par exemple pendant une durée de 1 heure.

On obtient alors une poudre constituée en majorité de BAS hexagonal.

Ce broyage peut être réalisé par voie humide dans un liquide tel que l'éthanol.

On peut utiliser par exemple un broyeur RETSCH (broyeur à billes) en WC.

Il est à noter qu'en allongeant la durée du second traitement thermique de l'étape (4), par exemple jusqu'à une durée de 6 heures à 20 heures, par exemple de 10 heures, il est possible de diminuer la quantité de phases secondaires.

Lorsque l'on souhaite utiliser du BAS monoclinique et non du BAS hexagonal, un traitement thermique prolongé par exemple d'une durée de 1 heure à 10 heures, à basse température, par exemple vers 300°C, permet de transformer le BAS hexagonal en BAS monoclinique.

Ledit oxyde de métal ou de métalloïde peut être choisi parmi l'alumine, la silice, et la mullite.

Selon l'invention, l'aluminosilicate de baryum BAS et le au moins un oxyde de métal ou de métalloïde ont des coefficients de dilatation « voisins».

Par « voisin » au sens de l'invention, on entend généralement que le coefficient de dilatation de l'aluminosilicate de baryum BAS et le coefficient de dilatation du au moins un oxyde de métal ou de métalloïde ne diffèrent pas de plus de 30%, de préférence pas de plus de 10%.

L'homme du métier peut facilement déterminer parmi les oxydes de métal ou de metalloïde quels sont les oxydes de métaux ou de métalloïdes qui respectent cette condition quant au coefficient de dilatation et qui peuvent donc être utilisés dans le matériau selon l'invention.

Le BAS de structure hexagonale possède un coefficient de dilatation thermique de 8,10⁻⁶°C⁻¹, il sera donc compatible avec l'alumine qui a un coefficient de dilatation voisin de 8,10⁻⁶°C⁻¹.

Le BAS de structure monoclinique possède quant à lui un coefficient de dilatation thermique de 2,3.10⁻⁶°C⁻¹ pour sa forme vitrocéramique, à 4,5.10⁻⁶°C⁻¹ pour sa forme monolithique (ces deux formes peuvent être utilisées), il sera donc plutôt compatible avec la silice ou la mullite.

Dans une forme de réalisation, lors de l'étape a), on prépare un mélange de la poudre d'aluminosilicate de baryum et de particules d'au moins un oxyde de métal ou de metalloïde.

Ces particules peuvent avoir une forme quelconque.

Il peut s'agir par exemple de grains de forme sphérique ou sphéroïdale, de fibres longues, ou encore de fibres courtes aussi appelées trichites ou whiskers.

Les fibres ont généralement une section droite circulaire ou quasi-circulaire.

Les fibres longues ont généralement une longueur de 100 microns à 10 mm, et un diamètre de 3 microns à 20 microns.

Les fibres courtes, trichites, ou whiskers ont généralement une longueur de 0,5 micron à moins de 100 microns (autrement dit de 0,5 micron à 100 microns, la valeur 100 microns étant exclue) et un diamètre de 0,5 micron à 3 microns.

Ainsi, on pourra par exemple utiliser des fibres d'alumine d'un diamètre de 10 µm, et d'une longueur après découpe d'environ 1 mm.

Les fibres d'alumine sont généralement préalablement désenzymées par exemple par un traitement thermique dans un four à 500°C sous air.

De telles fibres sont généralement disponibles auprès de la société 3M® sous la dénomination NEXTEL.

Le mélange de la poudre d'aluminosilicate de baryum, par exemple de la poudre de BAS hexagonale, et des particules d'au moins un oxyde de métal ou de métalloïde, par exemple des fibres d'alumine peut être réalisé par tout procédé de mélange connu.

Ce mélange peut être réalisé par voie humide dans un liquide tel que l'éthanol.

Ainsi, on pourra par exemple effectuer ce mélange pendant une durée de 0,5 minute à 60 minutes, par exemple de 1 minute, dans un liquide tel que de l'éthanol, dans un broyeur comme par exemple un broyeur RETSCH (broyeur à billes) en WC.

Dans une autre forme de réalisation, lors de l'étape a), la mise en contact est réalisée en imprégnant un tissu de fibres en au moins un oxyde de métal ou de métalloïde par une barbotine de la poudre d'aluminosilicate de baryum. Autrement dit, dans ce mode de réalisation, le renfort est un renfort fibreux constitué de fibres longues tissées.

On réalise ensuite un frittage de la poudre d'aluminosilicate de baryum et des renforts en au moins un oxyde de métal ou de métalloïde par un procédé de frittage à chaud avec un champ électrique pulsé.

La technologie du frittage à chaud avec champ électrique pulsé (« *Spark Plasma Sintering* » ou « *SPS* » en anglais) est aussi connue sous la dénomination anglaise de « *Field Activated Sintering Technique* » ou FAST ou encore sous la dénomination de « frittage flash ». Ce procédé permet notamment la densification rapide de poudres.

Le « SPS » est une technique de frittage qui consiste à appliquer simultanément sur l'échantillon pulvérulent à densifier une pression uniaxiale et des impulsions (« pulses ») de courant de forte intensité qui provoquent une montée en température de l'échantillon. Le courant est appliqué sous la forme de trains d'impulsions de courant, par exemple d'une période de 3,2 ms, dont l'intensité peut atteindre plusieurs milliers d'ampères, par exemple jusqu'à 8000 A, voire 50000 A.

Le courant est appliqué à l'échantillon par l'intermédiaire d'un montage de plateaux et de pistons en graphite, le mélange de la poudre de BAS et des particules d'au moins un oxyde est inséré à l'intérieur d'une matrice, chemise, pastilleuse, ou moule en graphite.

Le montage constitué par la chemise, pastilleuse, ou moule, les pistons et les plateaux, est le seul, dans l'enceinte sous vide, à monter en température.

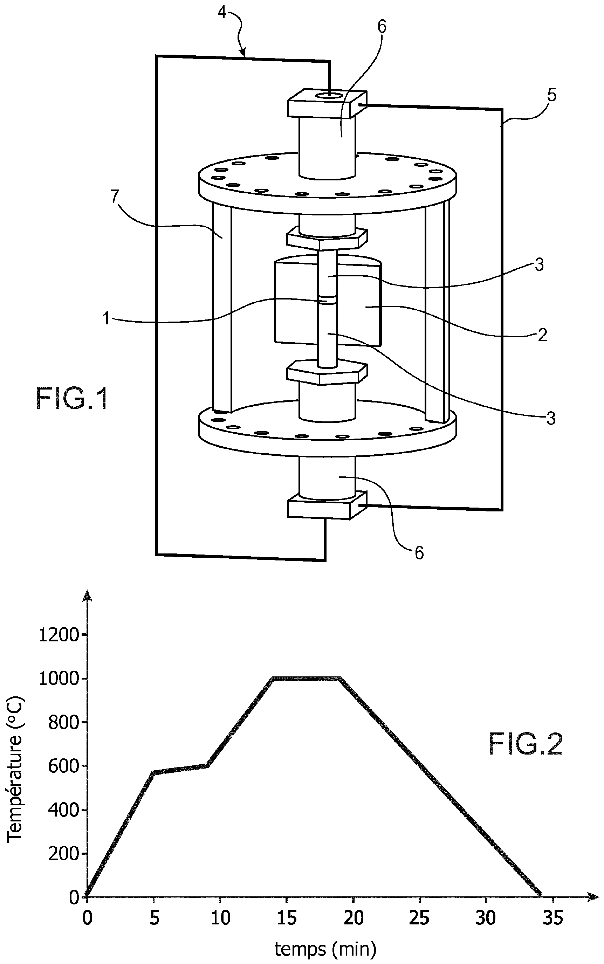

Plus exactement, on a représenté sur la Figure 1 le principe de fonctionnement d'un appareil de SPS convenant pour la mise en oeuvre du procédé selon l'invention, et ses principaux organes. Le mélange de la poudre de BAS et des particules d'au moins un oxyde (1) (ou le tissu de fibres imprégné), est placé dans un moule, une chemise, matrice, pastilleuse en graphite (2), entre deux pistons aussi en graphite (3). Une pression (4) est appliquée à ces pistons (3), et un courant continu (5) est appliqué à des électrodes (6). Le mélange de la poudre de BAS et des particules d'au moins un oxyde (1), les pistons (3), la chemise en graphite (2) et une portion des électrodes (6) sont placés à l'intérieur d'une enceinte sous vide (7).

La température est suivie par l'intermédiaire d'un pyromètre optique qui pilote également la puissance électrique injectée dans le montage.

Le principal intérêt de la technologie « SPS » est d'élever la température avec un minimum d'énergie calorifique et de densifier le mélange de poudre et de particules en des temps relativement courts de l'ordre de quelques minutes, par exemple de 5 à 10 minutes.

La rapidité de frittage permet de limiter les phénomènes de diffusion et de croissance granulaire ce qui a pour effet de conserver des tailles de grain submicroniques et des architectures complexes telles que celles des matériaux composites. Il est possible d'atteindre une densité proche de 100%.

On commence généralement par placer le mélange de la poudre de BAS et des particules d'au moins un oxyde à l'intérieur du moule, de la pastilleuse, chemise, matrice en graphite de la machine, dispositif de « SPS », décrit plus haut.

Généralement, on place une feuille de graphite souple tel que le produit commercialisé sous la dénomination commerciale de PAPYEX® par la société Carbone Lorraine entre le mélange de poudre et de particules et les parois internes du moule et entre la poudre et les pistons. Cette feuille a pour but d'empêcher les poudres de réagir avec le moule et les pistons et de les préserver.

Le PAPYEX® peut être revêtu sur une des ses faces, à savoir la face en contact avec le mélange de poudre et de particules, d'une couche de nitrure de bore BN.

Le BN joue le rôle de barrière de diffusion entre les oxydes et le graphite.

Le moule en graphite peut être également recouvert d'un feutre en graphite pour limiter le rayonnement.

La pastilleuse, matrice, chemise, moule en graphite et les pistons sont ensuite placés dans la machine de SPS telle que la machine décrite sur la Figure 1.

L'enceinte sous vide est fermée puis on amorce la mise sous vide. Lorsque le vide souhaité, c'est-à-dire lorsque la pression est généralement inférieure à 10 Pa, l'opération de frittage par SPS proprement dite peut alors commencer.

On applique une pression suffisante audit mélange de poudre de BAS et de particules d'au moins un oxyde, et simultanément, on applique un courant électrique pulsé suffisant audit mélange pour élever la température de la pièce jusqu'à une température suffisante pour provoquer un frittage du mélange de la poudre de BAS et des particules d'au moins un oxyde.

En d'autres termes, lorsque tout est en contact (pastilleuse, pistons, mélange), on peut générer un courant électrique afin de créer l'élévation de température. De manière générale, l'ampérage maximal que peut supporter une matrice est lié notamment à son diamètre. Ainsi, pour un diamètre d'échantillon de 8 mm, on peut appliquer 2000 A sans risquer de détériorer la matrice. Pour des diamètres plus importants tels que 20 mm, on peut appliquer 4000 A ou plus.

Le courant électrique pulsé appliqué est généralement de 1A à 50000A afin de créer une élévation de température jusqu'à une température (température de palier) comprise entre 1000°C et 2500°C. La pression qui est appliquée en même temps correspond à une force appliquée de 0,01 MPa à 500 MPa.

De préférence, la pression appliquée est selon l'invention généralement de 1 à 200 MPa et l'intensité appliquée est de préférence de 500 à 8000 A. De préférence, la pression est de 10 à 150 MPa, de préférence encore de 20 à 100 MPa, par exemple de 40 MPa.

De préférence, l'intensité est de 200 à 6000 A, de préférence encore de 300 à 1000 A.

Les valeurs de pression et d'intensité sont choisies à l'intérieur des plages ci-dessus de façon à ce que la température du mélange de poudre de BAS et de particules d'au moins un oxyde s'élève à une température (température de palier) permettant le frittage du mélange de poudre de BAS et de particules d'au moins un oxyde et sa densification, de préférence sa densification totale.

Une telle température est généralement de 700°C à 2000°C, de préférence de 1000°C à 1500°C, de préférence encore de 1100°C à 1300°C, par exemple de 1200°C.

La durée pendant laquelle est maintenue ladite température (encore appelée température de palier) par exemple de 1200°C, durée que l'on peut nommer aussi durée ou temps de palier est une durée courte généralement de 0 à 10 minutes, de préférence de 0 à 7 minutes, par exemple de 5 minutes.

Lorsque le temps de palier est égal à 0, cela signifie que l'on effectue une montée en température jusqu'à la température maximale et que l'on redescend à la température ambiante sans qu'un palier soit observé.

On notera que cette durée de palier est dans tous les cas très faible, au regard des autres méthodes de frittage.

Une telle durée de frittage très courte est particulièrement avantageuse dans le cas où le BAS est du BAS hexagonal, car il permet de « figer » la phase haute température, hexagonale, métastable du BAS.

De même, le temps de cycle hors refroidissement, et la durée globale, totale du cycle complet avec le refroidissement, sont réduits.

Ce temps de cycle est par exemple de 10 à 30 minutes, notamment de 20 à 22 minutes seulement, et la durée du cycle complet est d'environ une heure, ce qui constitue un autre avantage du procédé selon l'invention.

Il est généralement important de maîtriser la descente en température et en pression afin d'éviter la fissuration du matériau composite.

Le refroidissement du matériau est généralement effectué de manière pas trop brutale comme peut le comprendre l'homme du métier dans ce domaine de la technique. Ainsi, on observera généralement une vitesse de refroidissement de 1°C à 600°C par minute, par exemple de 10°C à 100°C/min depuis le palier de température.

De préférence, le refroidissement est effectué par rampes successives présentant des pentes différentes, ainsi le refroidissement peut s'effectuer par exemple comme suit : 45°C/min de la température de palier à 600°C ; puis refroidissement selon l'inertie de la machine de 600°C à l'ambiante.

Il est évident pour l'homme du métier, que le cycle température-pression est à optimiser pour chaque type de mélange de poudre de BAS et de particules d'au moins un oxyde, mis en oeuvre. En revanche, quelles que soient les montées, les descentes ou les durées des paliers en température et en pression, la simultanéité de la température et de la pression est indispensable au bon frittage du mélange de poudre de BAS et de particules d'au moins un oxyde.

Avantageusement, les paramètres de température et donc d'intensité, et de pression (ou de force appliquée, la pression dépendant de la surface d'appui suivant la relation bien connue P = F/S) ne sont pas, depuis la température ambiante et une pression de 0 MPa, appliqués de manière brutale, instantanée, mais sont élevés de manière progressive depuis la température ambiante et une pression de 0 MPa.

Pour la température (régie par l'intensité), on réalisera ainsi de préférence une montée progressive avec une rampe, ou plusieurs rampes présentant éventuellement des pentes différentes, ces rampes étant éventuellement séparées par des paliers intermédiaires, pour arriver jusqu'à la température maximale mentionnée plus haut, encore appelée température de palier ou de frittage.

La ou lesdites rampes de température ont préférentiellement une pente de 50°C à 200°C/min, par exemple de 80°C/min. ou de 100°C/min.

Pour la pression, on pourra, de la même manière, avantageusement réaliser une montée progressive avec une rampe, ou plusieurs rampes présentant éventuellement des pentes différentes, ces rampes étant éventuellement séparées par des paliers intermédiaires, pour arriver jusqu'à la pression maximale indiquée plus haut, encore appelée pression de palier ou de frittage.

La ou lesdites rampes de pression ont généralement une pente de 1 MPa/min à 20 MPa/min, de préférence de 5 à 10 MPa/min.

La montée en température et la montée en pression qu'elles soient progressives ou non, se font de préférence de manière simultanée, concomitante, en une même durée.

Si plusieurs rampes de pression et plusieurs rampes de température sont réalisées, les rampes de pression et de température correspondantes ont de préférence la même durée.

En appliquant les paramètres de température (et donc d'intensité) et/ou de pression (et donc de force appliquée) de manière progressive et non de manière brutale, soudaine, instantanée, on évite ainsi de soumettre le matériau à des contraintes trop fortes et aucune cassure du matériau n'est à déplorer.

A titre d'exemple, une montée en température, depuis la température ambiante (généralement 20°C à 25°C) jusqu'à 1000°C, pourra s'effectuer de la manière suivante (voir Figure 2 ; il est à noter que le cycle de la Figure 2, jusqu'à 1000°C, est conforme à l'invention, mais qu'il ne donne pas le matériau le plus dense):
- température ambiante à 570°C : 5 minutes environ ;
- 570°C à 600°C: 4 minutes environ ;
- 600°C à 1000°C : 5 minutes environ ;
- palier à 1000°C : 5 minutes environ ;
- refroidissement de 1000°C à la température ambiante : durée conditionnée par l'inertie thermique de la machine, par exemple de 10 minutes à 30 minutes, notamment 15 minutes.

Pendant le même temps, la pression évolue de la manière suivante :
- de 0 à 3,2 kN, 40 MPa: montée en 1 minute ;
- palier à 3,2 kN, 40 MPa: 20 minutes ;
- descente de 3,2 kN à 0 kN: 1 minute.

Encore à titre d'exemple, une montée en température, depuis la température ambiante (généralement 20°C à 25°C), cette fois jusqu'à 1200°C, pourra s'effectuer de la manière suivante (ce cycle peut être représenté en adaptant légèrement la Figure 2) :
- température ambiante à 570°C : 5 minutes_environ ;
- 570°C à 600°C: 4 minutes environ ;
- 600°C à 1200°C : 7,5 minutes environ ;
- palier à 1200°C : 5 minutes environ ;
- refroidissement de 1200°C à la température ambiante : durée conditionnée par l'inertie thermique de la machine, par exemple de 10 minutes à 30 minutes, notamment 20 minutes.

Pendant le même temps, la pression évolue de la manière suivante :
- de 0 à 3,2 kN, 40 MPa: montée en 1 minute ;
- palier à 3,2 kN, 40 MPa: 22,5 minutes ;
- descente de 3,2 kN à 0 kN: 1 minute.

Le courant est appliqué sous forme de séries, trains d'impulsions (« pulses ») ; chaque série, train, est constitué d'un nombre déterminé et réglable de « pulses ». Les séries (trains) sont séparées entre elles par un temps pendant lequel le courant appliqué est nul.

Dans le procédé selon l'invention, on utilise généralement des impulsions de 1 à 5 ms, par exemple de 3,3 ms de période, assemblées généralement par train de 1 à 15, par exemple 12 impulsions, chaque train étant généralement séparé par 1 à 15 périodes, par exemple 2 périodes, de la durée (telle que 3,3 ms) ci-dessus, sans courant.

Il est possible de changer ces valeurs mais le courant doit toujours garder la même géométrie, à savoir : des trains d'impulsions plus ou moins nombreux séparés par des périodes variables sans courant.

La tension appliquée est de quelques volts, généralement de 1 à 8 volts, de préférence de 2 à 7 volts, typiquement 3 volts pour 500 A.

A l'issue du refroidissement, généralement jusqu'à la température ambiante, par exemple de 20°C à 25°C, on récupère le matériau composite dans l'appareil de « SPS ».

Le matériau selon l'invention, du fait de ses excellentes propriétés mécaniques et de résistance à des températures élevées trouve son application dans des domaines aussi divers que l'aéronautique, l'aérospatiale par exemple pour la fabrication de radomes, l'industrie chimique et d'une manière générale dans tous les domaines où d'excellentes propriétés mécaniques à de hautes températures sont requises.

L'invention va maintenant être décrite en référence aux exemples suivants, donnés à titre illustratif et non limitatif.

### EXEMPLES.

Les exemples 2 à 4 sont des exemples qui montrent qu'il est préférable d'utiliser le protocole exposé plus haut pour obtenir avec certitude du BAS hexagonal.

### 1. Matières premières utilisées.

### a. Alumine (Al₂O₃).

La poudre d'alumine de référence 265497 provient de chez SIGMA-ALDRICH. Le d₅₀ des particules est de 10µm et sa pureté est de 99,7%.

### b. Silice (SiO₂).

La poudre de silice provient de chez SIGMA-ALDRICH, sa référence est S5631. C'est du SiO₂ sous forme quartz avec une pureté voisine de 99%, et une granulométrie comprise entre 0,5 et 10µm dont 80% entre 1 et 5µm.

### c. Carbonate de baryum (BaCO₃).

La poudre de carbonate de baryum provient de chez SIGMA-ALDRICH, sa référence est 237108. Sa granulométrie moyenne est de 5 pm, et sa pureté est supérieure à 99%.

### d. Fibres d'alumine (Al₂O₃).

Des fibres d'alumine Nextel 610®, provenant de chez 3M®, servent de renfort pour le composite. Les fibres sont préalablement désenzymées dans un four à 500°C sous air. Elles ont un diamètre de 10µm et elles sont découpées avec une paire de ciseaux à une longueur d'environ 1 mm.

### 2. Protocole expérimental.

### a. Protocole de mélange des poudres.

Les poudres sont pesées sur une balance METTLER AE260 DeltaRange® dans les proportions indiquées dans le Tableau 1.

Les poudres sont ensuite placées dans des mini jarres Retsch en carbure de tungstène (WC). 1g d'éthanol est ajouté au mélange de poudres. L'éthanol sert de solvant pour le mélange.

Deux billes de 7 mm et cinq billes de diamètre 3 mm en WC servent de corps broyant pour le mélange.

Les mini jarres sont ensuite refermées puis mises sous agitation pendant 30 min à 25 Hz à l'aide d'un vibro-broyeur Retsch MM200. Une fois le mélange réalisé, la suspension obtenue est vidée dans un cristallisoir et les mini jarres rincées à l'éthanol. Le liquide de rinçage est aussi versé dans le cristallisoir. Le cristallisoir est alors chauffé (STUART CR162) vers 100°C afin d'évaporer l'éthanol. Une fois l'éthanol éliminé, la poudre est grattée à l'aide d'une spatule en aluminium et récupérée dans des flacons.

**Tableau 1: Quantité de matière à mélanger**

| | BaCO₃ | Al₂O₃ | SiO₂ |
|---|---|---|---|
| Masse (g) | 0,47 | 0,24 | 0,29 |
| Mole (mg) | 1 | 1 | 2 |

### b. Préparation de la poudre de BAS.

Le BAS est synthétisé dans un four tubulaire selon un protocole en deux étapes.

La première étape consiste à mélanger les poudres de BaCO₃ et de SiO₂ dans un rapport molaire de 1 BaCO₃ pour 2 SiO₂, puis à fritter le mélange de poudres à 1150°C sous air pendant 4 h dans un four tubulaire Carbolite.

Le mélange de poudres se transforme alors en BaSi₂O₅.

Ensuite, dans une seconde étape, le composé BaSi₂O₅ est broyé au vibro-broyeur Retsch pendant 1 h, puis mélangé à l'alumine avec un rapport molaire de 1 BaSi₂O₅ pour 1 Al₂0₃. Ce nouveau mélange est enfin fritté dans un four tubulaire Carbolite à 1200°C sous air pendant 6 h.

Cette séparation en deux étapes permet d'améliorer les cinétiques de réaction et favorise ainsi l'apparition et la prépondérance du composé BaAl₂Si₂O₈ (BAS).

### c. Préparation du matériau composite selon l'invention.

Le BAS est broyé et réduit en poudre à l'aide du vibro-broyeur Retsch pendant 2 h.

La poudre de BAS et les fibres de renfort sont ensuite mélangées 1 min seulement, au vibro-broyeur Retsch, afin de ne pas trop abîmer les fibres. La masse totale de poudre et de fibre est fixée à 1g dont 20% en masse de fibre. Le mélange est effectué par voie liquide dans de l'éthanol (1g environ).

### d. Frittage du mélange de la poudre de BAS, et des fibres par un procédé de frittage à chaud avec un champ électrique pulsé (« Spark Plasma Sintering » ou « SPS » en anglais).

Le frittage du mélange de la poudre de BAS, et des fibres est réalisé selon l'invention par un procédé de frittage à chaud avec un champ électrique pulsé (« *Spark Plasma Sintering* » ou « *SPS* » en anglais*),* ou frittage flash.

Le procédé de SPS peut être réalisé avec un dispositif tel que celui représenté sur la Figure 1, déjà décrit plus haut.

Une feuille de Papyex® (feuille de graphite) est découpée aux dimensions internes du moule en graphite, puis elle est éventuellement en partie enduite de BN par exemple par pulvérisation à l'aide d'une bombe aérosol, et ensuite roulée et placée dans ce moule.

Le piston inférieur en graphite est ensuite inséré dans le moule.

Un disque de Papyex® de la même dimension que le piston est déposé au fond du moule.

Le mélange de poudre de BAS et de fibres de renfort préparé comme décrit plus haut, est introduit à l'aide d'une spatule dans le moule en graphite.

Ce mélange de poudre de BAS et de fibres de renfort est alors recouvert d'un autre disque de Papyex®, et le piston supérieur en graphite est ensuite inséré.

Comme on l'a déjà indiqué plus haut, il est aussi possible de recouvrir le Papyex® d'une couche de nitrure de bore (BN). Ce dépôt peut s'effectuer par exemple par pulvérisation sur une partie d'une seule face de chaque feuille, disque, à l'aide d'une bombe aérosol.

Le moule en graphite est enfin recouvert d'un feutre de graphite pour limiter le rayonnement et prévenir une éventuelle explosion du moule.

Le moule est placé dans la machine comme indiqué dans le schéma de la figure 1.

L'enceinte est d'abord fermée puis la mise sous vide est amorcée. Lorsque le vide atteint quelques Pascal (moins de 10 Pa), le frittage peut commencer. La pression appliquée est de 40 MPa et les rampes de température sont de 80°C/min entre 600°C et 1000°C ou 1200°C.

Le cycle de température utilisé pour 1000°C est représenté sur la Figure 2.

### Exemple 1.

Dans cet exemple, on prépare un matériau composite selon l'invention.

### a. Préparation du BAS.

### i. Premier traitement thermique, réalisé à 1150°C pendant 4 h, sur un mélange de poudres de BaCO₃ et de SiO₂.

Un premier traitement thermique est effectué avec un mélange de BaCO₃ (SIGMA-ALDRICH) et de SiO₂ (SIGMA-ALDRICH) à 1150°C, pendant 4 heures. Le matériau fritté obtenu est très blanc et assez friable.

De plus, les figures 3 et 4 montrent que la réaction entre SiO₂ et BaCO₃ n'est pas complète.

Il existe plusieurs phases et l'analyse EDS permet de déterminer les atomes qui les constituent.

Ainsi, il reste une quantité non négligeable de SiO₂ n'ayant pas réagi. La matrice est donc composée d'un tiers de SiO₂ et de deux tiers d'une phase à base de Ba, Si et O. La silice n'est pas détectée sur le diffractogramme de la figure 3 car elle doit être sous forme amorphe.

### ii. Deuxième traitement thermique, réalisé à 1200°C pendant 6h sur un mélange du matériau obtenu à l'issue du premier traitement thermique et d'une poudre d'Al₂O₃.

Le matériau obtenu précédemment, broyé, à l'issue du premier traitement thermique est mélangé avec de l'Al₂O₃ (SIGMA-ALDRICH) puis le tout est traité thermiquement à 1200°C pendant 6 heures.

Le matériau fritté obtenu n'est pas friable.

La micrographie de la figure 6 indique la présence d'une phase correspondant au BAS qui représente plus de la moitié du matériau (voir aussi le diffractogramme de la figure 5).

Cependant, il reste des particules composées d'atomes d'aluminium et d'oxygène. Ces particules sont de l'alumine résiduelle. Il existe une phase gris clair ne contenant pas d'aluminium. La réaction est donc incomplète. Par ailleurs, il est intéressant de noter la disparition totale de la silice.

### b) Elaboration du matériau composite conformément à l'invention.

Le BAS obtenu à l'issue du deuxième traitement thermique décrit plus haut est mélangé avec des fibres d'alumine puis fritté par SPS selon le protocole décrit plus haut.

Des essais de frittage sont réalisés en observant un palier à une température de 1000°C pendant 5 minutes, et d'autres essais de frittage sont réalisés en observant un palier à une température de 1200°C pendant 5 minutes.

Comme le montre la micrographie de la figure 7, le frittage par SPS à 1000°C ne densifie pas suffisamment la matrice du composite.

A 1200°C, (figure 8), la densification semble être totale et les fibres n'accusent pas de déformations liées au traitement thermique ou à la pression.

Les figures 9 et 10 et notamment la figure 10 montrent que la matrice pénètre bien dans les petits espaces entre les fibres.

De plus, les fibres ne présentent ni décohésion ni réaction avec la matrice.

De nombreux fragments sombres peuvent être observés sur les figures 9 et 10. Ces fragments sont faits d'alumine et proviennent sûrement des fibres.

Ce serait le mélange qui aurait généré ces éclats. Le diffractogramme de la figure 11 indique d'une part que la structure ne contient plus de silicate de baryum, et d'autre part qu'une faible partie de la phase hexagonale (« *hexacelsian* ») est devenue monoclinique (« *celsian* »).

S'il n'y a plus de silicate, cela signifie que toute la matrice est composée de BaAl₂Si₂O₈. Aucune fissuration n'est observée.

Dans les exemples 2 à 4 qui suivent, on montre qu'il est préférable d'utiliser un BAS préparé par le protocole décrit plus haut, lorsque l'on souhaite préparer un matériau composite comprenant une matrice de BAS à structure hexagonale, et des fibres de renfort en alumine.

### Exemple 2.

Dans cet exemple, on réalise le mélange simultané en une seule étape des trois poudres de départ BaCO₃, Al₂O₃, et SiO₂, puis on procède au frittage par SPS de ce mélange de poudres (sans fibres).

Les poudres utilisées dans cet exemple sont les poudres décrites aux points 1. a., 1. b., et 1. c. plus haut.

Les trois poudres de départ sont pesées et mélangées selon le protocole présenté au point 2.a. plus haut. Cependant, à la différence du protocole présenté au point 2.b., les trois poudres sont mélangées simultanément en une seule étape, dans les proportions du tableau 1.

On réalise ensuite le frittage par SPS avec un palier à 1000°C pendant 5 minutes du mélange de poudres ainsi obtenu.

La micrographie de la coupe d'une pastille ainsi obtenue par frittage par SPS du mélange des trois poudres de BaCO₃, Al₂O₃ et SiO₂ (SIGMA-ALDRICH) selon le cycle présenté sur la figure 2 avec un palier à 1000°C pendant 5 minutes, est présentée sur la figure 13.

Sur cette coupe, les grains de silice sont tous enrobés d'une coque claire riche en Baryum. Au contraire, les grains d'alumine n'ont pas d'entourage particulier, ils ne semblent pas avoir réagi.

Par ailleurs, le diffractogramme de la figure 12 révèle la présence d'une phase proche du BAS surstoechiométrique en Si. Cette phase indique que la formation du BAS a quand même débuté.

La synthèse du BAS par SPS met en évidence que la réaction entre BaCO₃ et SiO₂ est favorisée.

### Exemple 3.

Dans cet exemple, on réalise le mélange simultané en une seule étape des trois poudres de départ BaCO₃, Al₂O₃, et SiO₂, puis on procède au frittage par SPS de ce mélange de poudres (sans fibres).

Les poudres utilisées dans cet exemple ne sont pas les poudres décrites aux points 1. a., 1. b., et 1. c. plus haut. En effet, afin de ralentir la réaction par SPS, entre le BaCO₃ et SiO₂, et permettre une réaction avec Al₂O₃, il a été choisi d'utiliser dans cet exemple, une poudre de SiO₂ (PROLABO) plus grossière (d50 = 100µm) et une poudre d'Al₂O₃ (ATOCHEM) plus fine (d50 = 5µm).

Les trois poudres de départ sont pesées et mélangées selon le protocole présenté au point 2.a. plus haut. Cependant, à la différence du protocole présenté au point 2.b., les trois poudres sont mélangées simultanément en une seule étape, dans les proportions du Tableau 1.

On réalise ensuite le frittage par SPS avec un palier à 1000°C pendant 5 minutes du mélange de poudres ainsi obtenu.

La micrographie de la coupe d'une pastille ainsi obtenue par frittage par SPS du mélange des trois poudres de BaCO₃, Al₂O₃ et SiO₂ (SIGMA-ALDRICH) selon le cycle présenté sur la figure 2 avec un palier à 1000°C pendant 5 minutes, est présentée sur la figure 15.

La micrographie de la figure 15 met en évidence plusieurs phases. Les tâches les plus sombres correspondent à du silicium et de l'oxygène. Ce sont sûrement des gros grains de silice. Autour de ces grains s'est formée une enveloppe gris clair d'un mélange de Ba, Si et C. En gris foncé, il apparaît une phase constituée de Ba, Al, Si et O. Cette phase pourrait bien être le BAS recherché. Il existe aussi des plaquettes d'Al et O qui seraient vraisemblablement des plaquettes d'alumine. Ces plaquettes semblent d'ailleurs être en équilibre avec la phase de Ba-Al-Si-O en gris foncé. Enfin, il est possible de noter la présence d'une phase très claire contenant du tungstène. Ce tungstène provient de l'opération de mélange.

Les pastilles caractérisées en DRX (figure 14) révèlent la présence de BAS sous forme hexagonale. Cette phase est sûrement celle observée en gris foncé au MEB. Il y a aussi probablement des silicates de baryum tels que de la sanbornite (BaSi₂O₅) et du Ba₅Si₈O₂₁ qui seraient dans les zones claires proches des grains de SiO₂. De l'alumine sous forme de corindon pourrait être les plaquettes résiduelles. La silice n'apparaît pas sur le spectre, la silice résiduelle est sans doute amorphe.

### Exemple 4.

Dans cet exemple, on effectue un recuit avec un palier à une température de 1150°C pendant 4 heures des pastilles préparées dans l'exemple 3.

Les opérations de recuit sont effectuées dans un four tubulaire Carbolite.

Les rampes sont de 500 °C.h⁻¹ et le palier est de 4 h à 1150°C. Ce traitement est effectué sous air. Le recuit a pour objectif d'homogénéiser la structure du matériau.

Le matériau après recuit est essentiellement composé de BaAl₂Si₂O₈ comme le montrent le diffractogramme et la micrographie des figures 16 et 17.

Cependant, ce BAS a subi une transformation d'une phase hexagonale à une phase monoclinique.

Ainsi, la structure du matériau de la pastille a subi d'importantes contraintes qui ont provoqué des fissures visibles sur la figure 17.

Par ailleurs, les phases résiduelles sont, soit de l'alumine, soit un composé à base de Ba, Si et O.

La réaction est presque complète, le recuit a bien joué son rôle d'homogénéisation du matériau. Cependant l'obtention de la forme monoclinique, lorsque l'on souhaite utiliser des renforts en alumine n'est pas souhaitable. Ainsi un recuit de ce type n'est pas à utiliser dans le cas où l'on souhaite utiliser des renforts en alumine.

Les exemples 2 à 4 montrent clairement qu'il n'est pas possible d'obtenir du BAS hexagonal en mélangeant simultanément les trois poudres initiales BaCO₃, Al₂O₃ et SiO₂, même en jouant sur la granulométrie des poudres et en effectuant une étape de recuit.

En effet, cette étape de recuit favorise la formation de la phase monoclinique du BAS qui est incompatible avec un renfort fibreux d'alumine car la différence des coefficients de dilatation fibre/matrice est trop élevée ce qui a pour conséquence de créer des fissures au sein du matériau.

### REFERENCES

[1] I.G Talmy, D.A Haught, "Celsian-based (BaO.Al203.2Si02) ceramics as candidates for radomes", Proceedings of the 14th Conférence on metal carbon and ceramic composites, NASA Conf. Publ. 3097, Part I; 1990, p.239-50.
[2] N.P. Bansal, J.A. Setlock "Fabrication of fiber-reinforced celsian matrix composites", Composites: Part A 32 (2001), 1021-1029.
[3] C.H. Drummond, N.P. Bansal, "Crystallization behavior and properties of BaO.Al2O3.2SiO2 Glass matrices", NASA Contractor report 185209, February 1990.
[4] G.N. Shabanova, V.V. Taranenkova, A.N. Korogodskaya, and E.V. Khristich, "Structure of the BaO-Al203-Si02 system (a review)", Glass and Ceramics, Vol. 60, Nos. 1-2, 2003, traduit de Steklo I Keramika, No.2, p. 12-15, February 2003.
[5] Feng Ye, Limeng Liu, Jingxian Zhang, Qingchang Meng, "Synthesis of 30 wt% BAS/Si3N4 composite by spark plasma sintering", Composites Science and Technology 68 (2008), 1073-1079.
[6] A. Kremenovic, Ph. Colomban, B. Piriou, D. Massiot, P. Florian, "Structural and spectroscopic characterization of the quenched Hexacelsian", Journal of Physics and Chemistry of Solids 64 (2003), 2253-2268.
[7] CN-A-1931785
[8] CN-A-101428971
[9] Feng Ye, J. C. Gu, Y. Zhou, and M. Iwasa, "Synthesis of BaAl2Si208 glass-ceramic by a sol-gel method and the fabrication of SiCpl/BaAl2Si208 composites", Journal of the European Ceramic Society, 23 (2003), 2203-2209.
[10] US-A-5,281,559
[11] US-A-5,214,004
[12] US-A-5,256,610
[13] US-A-5,389,321
[14] FR-A-2751321
[15] FR-A-2677641
[16] JACS, 83 (12), p. 2907-2912, 2000.

## Revendications

1. Matériau composite constitué par une matrice en au moins un aluminosilicate choisi parmi l'aluminosilicate de baryum BAS, l'aluminosilicate de baryum et de strontium BSAS, l'aluminosilicate de strontium SAS, et leurs mélanges, renforcée par des renforts en au moins un oxyde de métal ou de métalloïde dont le coefficient de dilatation est voisin de celui du au moins un aluminosilicate.

2. Matériau composite selon la revendication 1, dans lequel la matrice est en aluminosilicate de baryum BAS.

3. Matériau composite selon la revendication 2, dans lequel le BAS comprend en majorité en masse du BAS de structure hexagonale ; de préférence les renforts sont alors en alumine.

4. Matériau composite selon la revendication 2, dans lequel le BAS comprend en majorité en masse du BAS de structure monoclinique ; de préférence les renforts sont alors en silice et/ou en mullite.

5. Matériau composite selon l'une quelconque des revendications précédentes, dans lequel les renforts en au moins un oxyde de métal ou de métalloïde se présentent sous une ou plusieurs forme(s) choisie(s) parmi les particules telles que les fibres longues, les fibres courtes aussi appelées trichites ou whiskers ; et les tissus de fibres.

6. Matériau selon l'une quelconque des revendications précédentes, dans lequel la matrice représente de 99 à 50% % en masse du matériau, et les renforts représentent de 1 à 50% en masse du matériau.

7. Matériau selon l'une quelconque des revendications précédentes, qui est un matériau dense avec une densité de 80% à 100% de la densité théorique.

8. Procédé de préparation du matériau composite selon l'une quelconque des revendications 1 à 7, dans lequel on réalise les étapes successives suivantes :
a) on met en contact une poudre d'au moins un aluminosilicate choisi parmi l'aluminosilicate de baryum BAS, l'aluminosilicate de baryum et de strontium BSAS, l'aluminosilicate de strontium SAS, et leurs mélanges, avec des renforts en au moins un oxyde de métal ou de métalloïde dont le coefficient de dilatation est voisin de celui du au moins un aluminosilicate;
b) on réalise un frittage de la poudre d'au moins un aluminosilicate et des renforts en au moins un oxyde de métal ou de métalloïde par un procédé de frittage à chaud avec un champ électrique pulsé ;
c) on refroidit la poudre et les renforts frittés ;
d) on récupère le matériau composite.

9. Procédé selon la revendication 8, dans lequel la poudre d'au moins un aluminosilicate est une poudre d'aluminosilicate de baryum BAS.

10. Procédé selon la revendication 9, dans lequel la poudre de BAS comprend en majorité en masse du BAS de structure hexagonale.

11. Procédé selon la revendication 10, dans lequel la poudre de BAS, qui comprend en majorité en masse du BAS de structure hexagonale, est préparée en réalisant les étapes successives suivantes :
- on mélange de la poudre de BaCO₃ et de la poudre de SiO₂ dans un rapport molaire de 1 BaCO₃ pour 2 SiO₂ ;
- on sèche puis on fritte le mélange de la poudre de BaCO₃ et de la poudre de SiO₂, moyennant quoi on obtient un composé constitué en majorité du composé BaSi₂O₅ ;
- on broie le composé constitué en majorité de BaSi₂O₅, moyennant quoi on obtient une poudre dudit composé constitué en majorité de BaSi₂O₅ ;
- on mélange la poudre de composé constitué en majorité de BaSi₂O₅, et de la poudre de Al₂O₃ dans un rapport molaire de 1 BaSi₂O₅ pour 1 Al₂O₃ ;
- on sèche puis on fritte le mélange de la poudre de composé constitué en majorité de BaSi₂O₅, et de la poudre d'Al₂O₃, et on broie le mélange fritté, moyennant quoi on obtient une poudre de BAS, qui comprend en majorité en masse du BAS de structure hexagonale.

12. Procédé selon la revendication 10 ou 11, dans lequel les renforts sont en alumine.

13. Procédé selon la revendication 8, dans lequel le BAS comprend en majorité en masse du BAS de structure monoclinique ; de préférence les renforts sont alors en silice et/ou en mullite.

14. Procédé selon l'une quelconque des revendications 8 à 13, dans lequel les renforts en au moins un oxyde de métal ou de métalloïde se présentent sous une ou plusieurs forme(s) choisie(s) parmi les particules telles que les fibres longues, les fibres courtes aussi appelées trichites ou whiskers, les tissus de fibres.

15. Procédé selon la revendication 8, dans lequel lors de l'étape a) on prépare un mélange de la poudre d'au moins un aluminosilicate, telle que de la poudre d'aluminosilicate de baryum et de particules en au moins un oxyde de métal ou de métalloïde, ou ,dans lequel lors de l'étape a) on imprègne un tissu de fibres en au moins un oxyde de métal ou de métalloïde par une barbotine de la poudre d'au moins un aluminosilicate, telle que de la poudre d'aluminosilicate de baryum.

## Patentansprüche

1. Verbundmaterial, bestehend aus einer Matrix aus zumindest einem Aluminosilikat, ausgewählt aus Bariumaluminosilikat BAS, Barium- und Strontiumaluminosilikat BSAS, Strontiumaluminosilikat SAS, und deren Gemische, verstärkt mit Verstärkungen aus zumindest einem Metall- oder Metalloidoxid, dessen Ausdehnungskoeffizient nahe bei dem des zumindest einen Aluminosilikats liegt.

2. Verbundmaterial nach Anspruch 1, wobei die Matrix aus Bariumaluminosilikat BAS besteht.

3. Verbundmaterial nach Anspruch 2, wobei das BAS in der Masse überwiegend BAS mit hexagonaler Struktur enthält, wobei vorzugsweise die Verstärkungen dann aus Aluminiumoxid bestehen.

4. Verbundmaterial nach Anspruch 2, wobei das BAS in der Masse überwiegend BAS mit monokliner Struktur enthält, wobei vorzugsweise die Verstärkungen dann aus Siliciumoxid und/oder Mullit bestehen.

5. Verbundmaterial nach einem der vorangehenden Ansprüche, wobei die Verstärkungen aus zumindest einem Metall- oder Metalloidoxid in einer oder mehreren Formen vorliegen, ausgewählt aus Teilchen, wie langen Fasern, kurzen Fasern, auch Trichits oder Whiskers genannt, und Fasergeweben.

6. Material nach einem der vorangehenden Ansprüche, wobei die Matrix 99 bis 50 Masse-% des Materials darstellt und die Verstärkungen 1 bis 50 Masse-% des Materials darstellen.

7. Material nach einem der vorangehenden Ansprüche, bei dem es sich um ein dichtes Material mit einer Dichte von 80% bis 100 % der theoretischen Dichte handelt.

8. Verfahren zum Herstellen eines Verbundmaterials nach einem der Ansprüche 1 bis 7, wobei die nachstehenden, aufeinanderfolgenden Schritte erfolgen:
a) Inkontaktbringen eines Pulvers aus zumindest einem Aluminosilikat, ausgewählt aus Bariumaluminosilikat BAS, Barium- und Strontiumaluminosilikat BSAS, Strontiumaluminosilikat SAS, und deren Gemische, mit Verstärkungen aus zumindest einem Metall- oder Metalloidoxid, dessen Ausdehnungskoeffizient nahe bei dem des zumindest einen Aluminosilikats liegt;
b) Durchführen einer Sinterung des Pulvers aus zumindest einem Aluminosilikat und der Verstärkungen aus zumindest einem Metall- oder Metalloidoxid durch ein Heißsinterungsverfahren mit einem gepulsten elektrischen Feld (Spark-Plasma-Sintern SPS Verfahren);
c) Abkühlen des gesinterten Pulvers und der gesinterten Verstärkungen;
d) Gewinnen des Verbundmaterials.

9. Verfahren nach Anspruch 8, wobei das Pulver aus zumindest einem Aluminosilikat ein Pulver aus Bariumaluminosilikat BAS ist.

10. Verfahren nach Anspruch 9, wobei das BAS-Pulver in der Masse überwiegend BAS hexagonaler Struktur enthält.

11. Verfahren nach Anspruch 10, wobei das BAS-Pulver, das in der Masse überwiegend BAS hexagonaler Struktur enthält, hergestellt wird, indem die nachstehenden, aufeinanderfolgenden Schritte erfolgen:
- Vermischen von Pulver aus BaCO₃ und Pulver aus SiO₂ in einem Molverhältnis von 1 BaCO₃ zu 2 SiO₂;
- Trocknen, dann Sintern des Gemischs aus dem BaCO₃-Pulver und dem SiO₂-Pulver, wodurch eine Verbindung entsteht, die überwiegend aus der Verbindung BaSi₂O₅ besteht;
- Zermahlen der überwiegend aus BaSi₂O₅ bestehenden Verbindung, wodurch ein Pulver aus der überwiegend aus BaSi₂O₅ bestehenden Verbindung erhalten wird;
- Vermischen des Pulvers aus der überwiegend aus BaSi₂O₅ bestehenden Verbindung und Pulvers aus Al₂O₃ in einem Molverhältnis von 1 BaSi₂O₅ zu 1 Al₂O₃;
- Trocknen, dann Sintern des Gemischs aus dem Pulver aus der überwiegend aus BaSi₂O₅ bestehenden Verbindung und des Pulvers aus Al₂O₃, dann Zermahlen des gesinterten Gemisches, wodurch ein BAS-Pulver erhalten wird, das in der Masse überwiegend BAS hexagonaler Struktur enthält.

12. Verfahren nach Anspruch 10 oder 11, wobei die Verstärkungen aus Aluminiumoxid bestehen.

13. Verfahren nach Anspruch 8, wobei das BAS in der Masse überwiegend BAS mit monokliner Struktur enthält, wobei vorzugsweise die Verstärkungen dann aus Siliciumoxid und/oder Mullit bestehen.

14. Verfahren nach einem der Ansprüche 8 bis 13, wobei die Verstärkungen aus zumindest einem Metall- oder Metalloidoxid in einer oder mehreren Formen vorliegen, ausgewählt aus Teilchen, wie langen Fasern, kurzen Fasern, auch Trichits oder Whiskers genannt, und Fasergeweben.

15. Verfahren nach Anspruch 8, wobei in Schritt a) ein Gemisch aus dem Pulver aus zumindest einem Aluminosilikat, wie etwa das Pulver aus Bariumaluminosilikat, und Teilchen aus zumindest einem Metall- oder Metalloidoxid hergestellt wird, oder wobei in Schritt a) ein Fasergewebe aus zumindest einem Metall- oder Metalloidoxid mit einem Schlicker aus dem Pulver aus zumindest einem Aluminosilikat, wie etwa aus dem Pulver aus Bariumaluminosilikat, getränkt wird.

## Claims

1. A composite material consisting of a matrix made of at least one aluminosilicate selected from barium aluminosilicate BAS, barium and strontium aluminosilicate BSAS, strontium aluminosilicate SAS, and mixtures thereof, reinforced by reinforcements made of at least one metal or metalloid oxide, the expansion coefficient of which is close to that of said at least one aluminosilicate.

2. The composite material according to claim 1, wherein the matrix is made of barium aluminosilicate BAS.

3. The composite material according to claim 3, wherein the BAS in majority by mass comprises BAS of hexagonal structure; preferably the reinforcements are then made of alumina.

4. The composite material according to claim 2, wherein the BAS in majority by mass comprises BAS of monoclinic structure; preferably the reinforcements are then made of silica and/or made of mullite.

5. The composite material according to any one of the preceding claims, wherein the reinforcements made of at least one metal or metalloid oxide appear in one or several form(s) selected from particles such as long fibers, short fibers also-called whiskers; and fabrics of fibers.

6. The composite material according to any one of the preceding claims, wherein the matrix represents 99 to 50% by mass of the material, and the reinforcements represent 1 to 50% by mass of the material.

7. The material according to any one of the preceding claims, which is a dense material with a density from 80% to 100% of the theoretical density.

8. A method for preparing the composite material according to any one of claims 1 to 7, wherein the following successive steps are carried out:
a) a powder of at least one aluminosilicate selected from barium aluminosilicate BAS, barium and strontium aluminosilicate BSAS, strontium aluminosilicate SAS, and mixtures thereof, is put into contact with reinforcements made of at least one metal or metalloid oxide, the expansion coefficient of which is close to that of said at least one aluminosilicate;
b) sintering of the powder of at least one aluminosilicate and of the reinforcements made of at least one metal or metalloid oxide is carried out by a hot sintering method with a pulsed electric field (Spark Plasma Sintering SPS method);
c) the sintered powder and reinforcements are cooled;
d) the composite material is recovered.

9. The method according to claim 8, wherein the powder of at least one aluminosilicate is a barium aluminosilicate BAS powder.

10. The method according to claim 9, wherein the BAS in majority by mass comprises BAS of hexagonal structure.

11. The method according to claim 10, wherein the BAS powder, which in majority by mass comprises BAS of hexagonal structure, is prepared by carrying out the following successive steps:
- BaCO₃ powder and SiO₂ powder are mixed in a molar ratio of 1 BaCO₃ for 2 SiO₂ ;
- the mixture of the BaCO₃ powder and of the SiO₂ powder is dried and then sintered, whereby a compound in majority consisting of the compound BaSi₂O₅ is obtained;
- the compound in majority consisting of BaSi₂O₅ is milled, whereby a powder of said compound in majority consisting of BaSi₂O₅ is obtained;
- the powder of the compound in majority consisting of BaSi₂O₅, and Al₂O₃ powder are mixed in a molar ratio of 1 BaSi₂O₅ for 1 Al₂O₃ ;
- the mixture of the powder of the compound in majority consisting of BaSi₂O₅, and of the Al₂O₃ powder is dried and then sintered, and the sintered mixture is milled, whereby a BAS powder is obtained, which in majority by mass comprises BAS of hexagonal structure.

12. The method according to claim 10 or 11, wherein the reinforcements are made of alumina.

13. The method according to claim 8, wherein the BAS in majority by mass comprises BAS of monoclinic structure, preferably the reinforcements are then made of silica and/or made of mullite.

14. The method according to any one of claims 8 to 13, wherein the reinforcements made of at least one metal or metalloid oxide appear in one or several form(s) selected from particles such as long fibers, short fibers also-called whiskers, fabrics of fibers.

15. The method accordingto claim 8, wherein during step a), a mixture of the powder of at least one aluminosilicate, such as barium aluminosilicate powder, and of particles made of at least one metal or metalloid oxide is prepared, or wherein during step a), a fabric of fibers made of at least one metal or metalloid oxide is impregnated with a slip (slurry) of the powder of at least one aluminosilicate, such as barium aluminosilicate powder.
